# EUROPEAN PATENT SPECIFICATION

(11) **EP 0 873 817 B1**
(45) Date of publication and mention of the grant of the patent: **08.08.2001**
(21) Application number: 98830193.3
(22) Date of filing: 31.03.1998
(51) Int. Cl.: B23Q 7/00, B23Q 1/66, B23Q 7/14

(54) **Machine tool for machining long workpieces**
Werkzeugmaschine zum Bearbeiten von langen Werkstücken
Machine-outil pour l'usinage de pièces allongées

(43) Date of publication of application: 28.10.1998
(60) Divisional application: 01201348.8
(73) Proprietor: DITTA BACCI PAOLINO DI GIUSEPPE BACCI DI AGOSTINO BACCI, I-56021 Cascina, Pisa (IT)
(72) Inventor: Ruggieri, Alberto, 56025 Pontedera, Pisa (IT)
(74) Representative: Mannucci, Michele

(56) References cited:
- EP-A- 0 351 836
- EP-A- 0 562 216
- EP-A- 0 744 244
- EP-A- 0 808 691
- DE-A- 3 211 170
- DE-A- 3 921 042
- DE-A- 4 312 768
- FR-A- 2 287 306
- US-A- 4 970 765
- US-A- 4 999 895
- US-A- 5 429 461
- US-A- 5 468 101

## Description

This invention relates to a machine tool for machining long workpieces, as for example parts for chairs.

More specifically, the present invention relates to a machine tool of the type that comprises supporting and clamping means for the work and a machining head with at least one chuck and that is moveable about two axes of rotation along a first axis of horizontal translation and along a second axis of vertical translation, the machining head and the supporting means also being capable of relative movement along a third axis of horizontal translation perpendicular to the first and second axes of translation.

A machine of this kind is described for example in EP-A-0,744,244.

The object of the present. invention is to provide a machine of the abovementioned kind that will be more flexible and permit faster machining of the workpieces. Another object of the present invention is to provide a machine with increased work safety.

These and other objects and advantages, which will be clear to those skilled in the art from a reading of the following text, are achieved with the combination of features of claim **1**.

According to the invention, the machine includes at least one flat, basically horizontal bearing surface of basically rectangular shape, with a long side and a short side, that is able to assume a position in. which the long side is perpendicular to the first axis of horizontal translation of the head, and in which said bearing surface is equipped with clamping means for a plurality of workpieces. The bearing surface is formed by a pair of edge components, as for example a pair of supporting beams running along the long sides of an imaginary bearing surface of rectangular shape.

With this configuration it is possible to carry out sequential machining of a plurality of long components of moderate lengthwise dimensions, fixed to the bearing surface in such a way as to be parallel to the short side of this surface and thus to project at both ends from this surface. The machining head can in this way sequentially machine both ends of all the workpieces with relatively short strokes and therefore quickly.

The relative movement between the machining head and the bearing surface along the third axis of horizontal translation can be assigned to the machining head. However, in a highly advantageous version of the invention this movement is assigned to the bearing surface. This means that the stroke along the second axis of translation can be very long without affecting the rigidity of the machining head. This makes it possible to undertake an extra stroke along the second axis to bring the bearing surface into a workpiece loading and unloading area, outside the range of action of the machining head. The loading and unloading area can therefore be separated from the operating area by a moveable protective wall, and loading and unloading can take place without machining having to be stopped. It thus becomes possible to equip the machine with two bearing surfaces on which workpieces can be machined and so carry out reciprocating cycles, i.e. cycles of work in which, while one series of workpieces fixed to one bearing surface is being machined by the machine head, the operations of unloading workpieces machined during the previous cycle and of loading workpieces for the next machining cycle can be proceeding on the second bearing surface.

The two (or more) bearing surfaces can be moved independently of one another and can be positioned alternately in a working area and in a loading and unloading area, these areas being separated by corresponding protective walls or screens. Moreover, assigning the movement along the third axis of translation to the bearing surface rather than to the head makes it possible to reduce the dimensions of the machine along the direction of the first axis of translation.

To increase the flexibility of the machine, in one highly advantageous embodiment the bearing surface or each bearing surface can be oriented about a vertical axis in order alternatively to assume a position in which its short side is perpendicular to said first axis of horizontal translation. This enables longer workpieces to be machined by arranging them parallel to the first axis of horizontal translation.

As will be made clear later with reference to certain machining cycles, this offers the possibility of great flexibility. It is even possible, where two bearing surfaces are provided, to position said surfaces such that their long sides are parallel to the first axis of horizontal translation and to clamp across them workpieces of a length such as to require simultaneous clamping on two surfaces, in which case both surfaces will be moved simultaneously from the loading and unloading area to the working area and back again.

Further advantageous characteristics and embodiments of the machine according to the invention are indicated in the attached dependent claims.

A clearer understanding of the invention will be provided by the description and the accompanying drawing, which latter shows a practical and non-restrictive embodiment of the invention. More particularly, in the drawing:
Fig. 1 shows a plan view of a first embodiment of a machine which does not fall in the scope of the annexed claims, with two bearing surfaces in a first working position;
Fig. 2 shows a plan view of the machine of Fig. 1 in a different working position;
Fig. 3 shows a side view on III-III as marked in Fig. 2;
Fig. 4 shows a front view of the machine in a third working position;
Fig. 5 shows a plan view on V-V as marked in Fig. 4, in which the protective screens, omitted for simplicity in the previous figures, are also indicated;
Fig. 6 shows a plan view of an embodiment of the machine according to the invention in a position equivalent to that of Fig. 1;
Fig. 7 shows the machine of Fig. 6 in a different working position;
Fig. 8 shows a side view on VIII-VIII as marked in Fig. 7;
Fig. 9 shows a front view on IX-IX as marked in Fig. 8 without the workpieces undergoing machining;
Fig. 10 shows a view similar to that of Fig. 9, with a different working position; and
Fig. 11 shows a plan view of the machine in the same position as Fig. 9, with the protective walls.

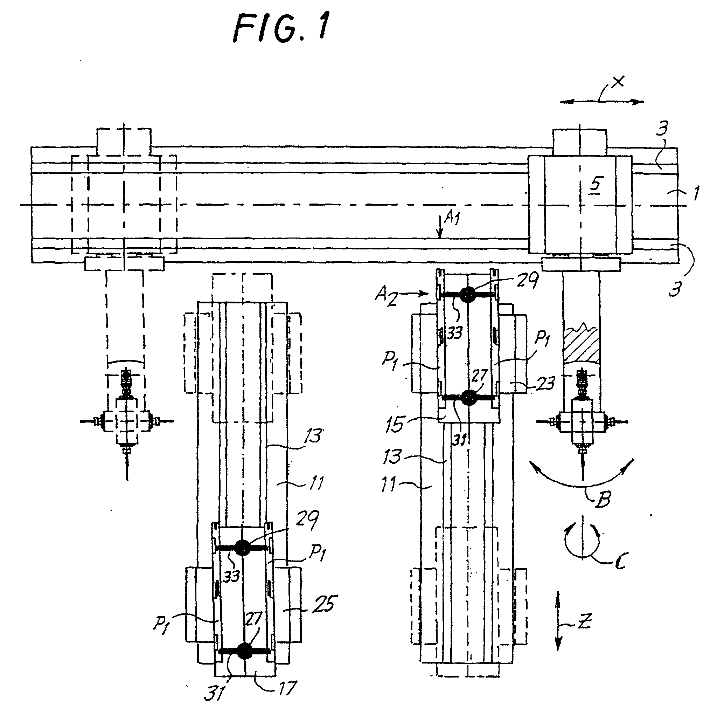

Referring initially to the example of an embodiment illustrated in Figs. 1-5, the machine has a base 1 equipped with rails 3 on which an upright 5 moves carrying a machining head 7. The machining head is fitted (in the example shown in the drawing) with four chucks in a cross arrangement. It is intended that the head could also have any other configuration, for example with just a single chuck or with two or more chucks. The four-chuck form in a cross arrangement is especially advantageous because of the great flexibility offered, which can be increased by the provision of a tool magazine and an automatic tool changing system, of a type known per se and not illustrated.

The upright 5 can be moved in the direction of the double arrow X, which represents a first axis of horizontal translation. The movement is produced by known means (not illustrated) for example a threaded rod and a nut, and is controlled by a suitable numerical control system. Shown in Figs. 1, 2, 4 and 5 are the two extreme positions, one in solid lines and the other in broken lines, which the upright 5 can reach as it moves along the axis X.

The machining head 7 can move up and down the upright 5 as indicated by the double arrow Y, which represents a second axis of translation, this time vertical, under numerical control.

Provision is also made for a rotary movement about a first axis of rotation B of the head 7 (this axis is parallel to the first axis of translation X) and a second axis of rotation C of the head 7 (this axis is perpendicular to the axes of translation X and Y). In the drawing the two axes of rotation B and C are indicated by double arrows representing the respective rotational movements.

Running at right angles to the base 1 are two tracks 11 with rails 13 to enable two bearing surfaces 15 and 17 on uprights 19, 21 integral with carriages 23, 25 to travel along the rails 13. The two carriages 23, 25 are capable of motion along a third axis of horizontal translation under numerical control. The movement is indicated by the double arrow Z in the drawing. The axis of translation Z is perpendicular to the axes X and Y.

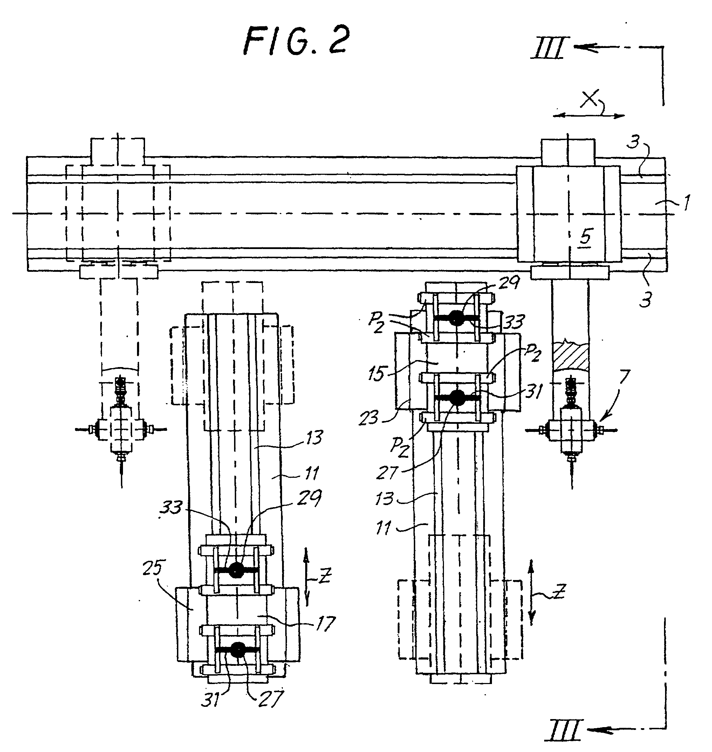

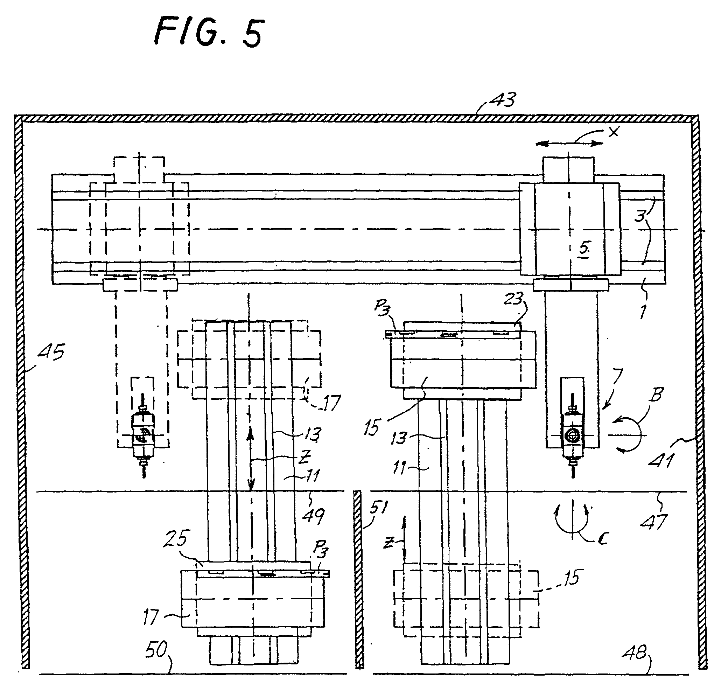

As can be seen by comparing Figs. 1, 2 and Fig. 5, the two bearing surfaces 15, 17 - which are of rectangular form with a long side and a short side - can alternatively assume a first position with its long side perpendicular to the first axis of translation X (Figs. 1 and 2), and a second position with its long side parallel to the first axis of translation X (Fig. 5). This allows a large number of machining actions and great flexibility, as will become clear.

The two bearing surfaces are equipped with clamping means for fixing the workpieces. The clamping means may include suction holes (not shown) in the bearing surfaces. Alternatively, or in combination, mechanical, hydraulic or pneumatic clamping means may be provided. In the example illustrated there are two short-stroke piston/cylinder actuators, marked 27, 29, with hold-down means 31, 33.

Fig. 1 shows one method of using the machine described thus far. In this method of use, long parts P1 are fixed to the surfaces 15, 17 for machining on three sides, specifically on an extremity turned toward the upright 3, on the uppermost surface and on the side turned out away from the bearing surfaces. Two of the directions from which the work is attacked by the tools of the head 7 are indicated by A1, A2 in Fig. 1, while the third direction is the vertical. While bearing surface 17 is at its furthest point from the base 1 and machining head 7, for unloading of machined workpieces and loading of unmachined workpieces, surface 15 will be in the working area and the two workpieces P1 clamped to it can be machined in rapid succession. The approach movements and feed movements are given to the head (axes X, Y) and to the bearing surface (axis Z).

Once the machining of the workpieces P1 on bearing surface 15 is completed, the latter is withdrawn along axis Z and moved, by an extra stroke, out of the area of action of the machining head 7, while bearing surface 17 carrying the workpieces clamped to it is moved into the working area of the head 7, which traverses along the base 1 to the working area adjacent to bearing surface 17 (position shown in broken lines in Fig. 1).

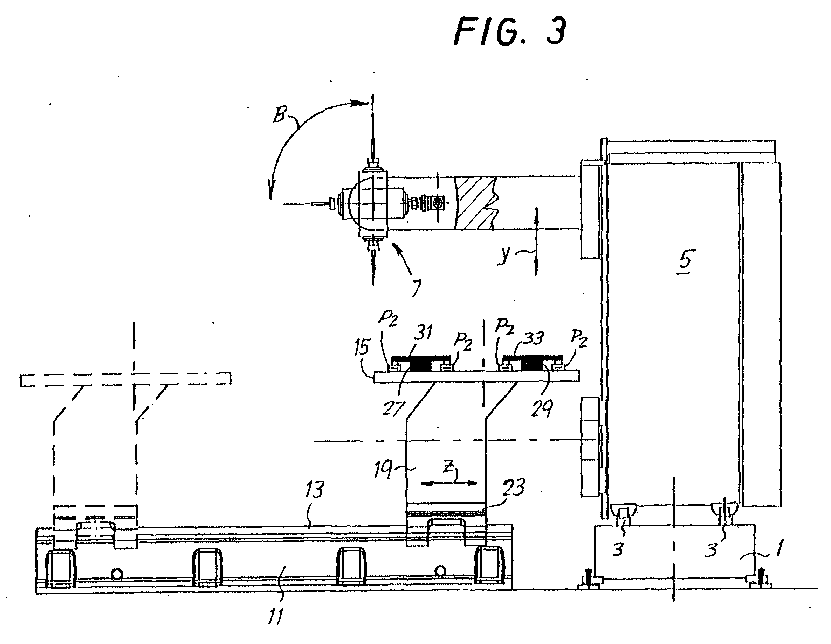

With the same arrangement of the bearing surfaces 15, 17 it is also possible to machine in rapid succession and by a reciprocating cycle workpieces P2 of moderate size, as shown in Figs. 2 and 3. Here the workpieces P2 are clamped at right angles to the long sides of the surfaces 15, 17 and therefore at right angles to axis Z, with the aid of suitable equipment. As shown clearly in Fig. 2, the width of the bearing surfaces 15, 17 is selected to ensure that both ends of the workpieces P2 project beyond the bearing surfaces and can easily be machined by the tools of the machining head. The bearing surfaces 15 and 17 work in a reciprocating cycle, that is to say with one bearing surface in a working position (surface 15 in Fig. 2) and the other in a loading/unloading position.

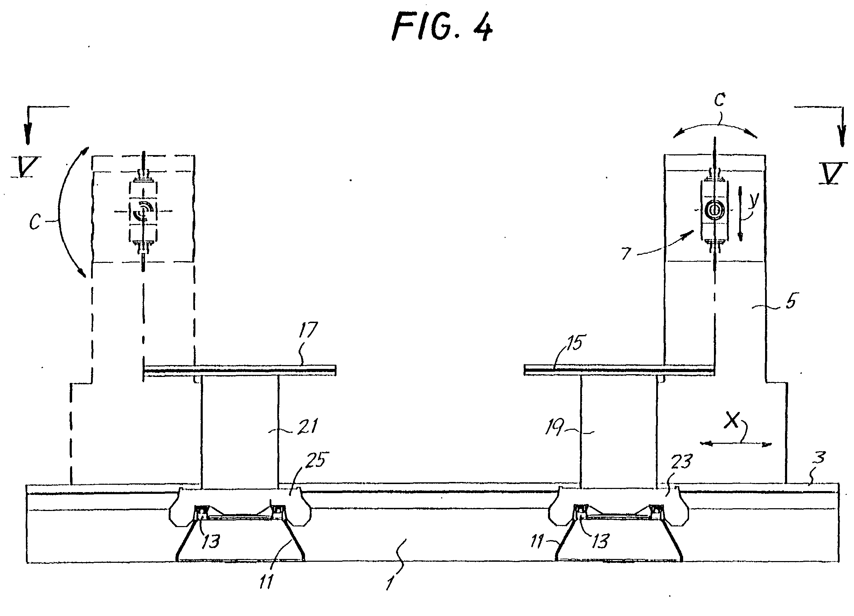

When the bearing surfaces 15 and 17 adopt the position shown in Figs. 4 and 5 they can be used to clamp workpieces P3 (Fig. 5) of great length. The workpieces P3 are machined on three sides and are positioned so that the end intended to be machined is projecting from the bearing surface. With this arrangement it is again possible to adopt a reciprocating cycle, with one surface (15) in the machining position and the other (17) in the loading and unloading position. It is even possible to machine even larger work by clamping it simultaneously across both bearing surfaces 15 and 17.

Fig. 5 also shows the protective screens of the machine, which are not shown in the other figures in order to simplify the drawing. Fixed screens 41, 43, 45 are arranged around the machining center. Two pairs of moveable screens 47, 48, 49, 50 having, for example, vertical movement, are provided for the two tracks 11. These screens are for isolating the machining area in which the machining head 7 moves, from the loading and unloading areas in which the bearing surfaces 15, 17 wait. The provision of two shields for each working area used by the bearing surfaces 15 and 17 enables machining to be carried out safely with long movements along the axis Z.

Where it is intended that it should be possible to use the bearing surfaces 15, 17 simultaneously for clamping large workpieces, and not adopting the reciprocating cycle, the removeable intermediate screen 51 can be taken away.

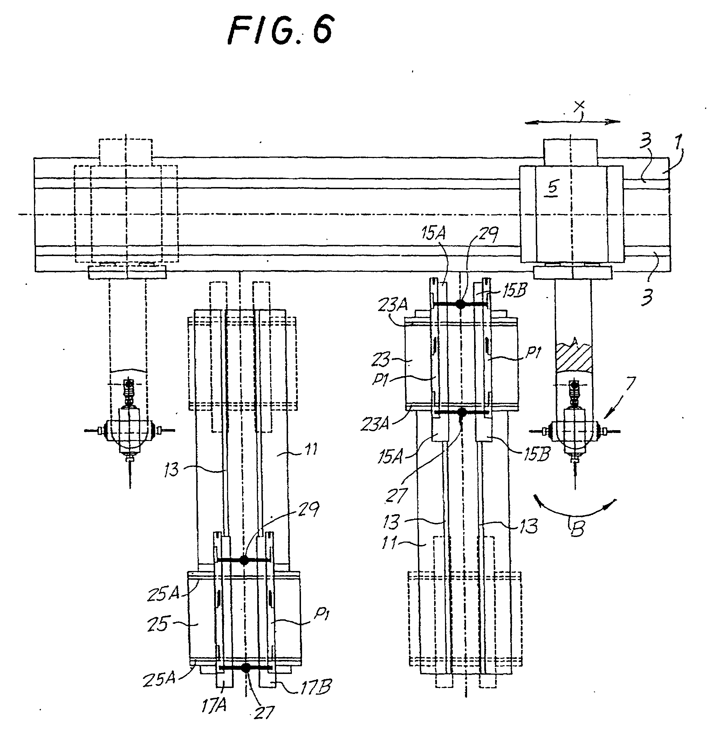

Figs. 6-11 show an improved embodiment of the present invention. In these figures identical numbers denote parts identical or corresponding to those of Figs. 1-5.

The main difference between this and the embodiment described above is that the bearing surfaces 15 and 17 are not formed by solid rectangular tables but rather by pairs of beams 15A, 15B and 17A, 17B. Each beam 15A, 15B is mounted on its own upright 19A, 19B, while each beam 17A, 17B is mounted on its own upright 21A, 21B. The bearing surfaces are still rectangular, but in this case are represented by geometrical surfaces, of which the two beams form the long sides.

The pairs of uprights 19A, 19B and 21A, 21B stand on the carriages 23, 25 and their distance is adjustable. To this end each carriage 23, 25 comprises pairs of adjusting rails 23A, 25A along which the uprights 19A, 19B, 21A, 21B can be fixed. In this way the transverse dimension of the rectangular bearing surfaces can be varied to suit the dimensions of the workpieces and the type of machining to be carried out. The beams 15A, 15B and 17A, 17B are also detachable from the uprights 19, 21 and can be mounted crosswise, i.e. parallel to the axis X of translation of the machining head.

In Fig. 6 the uprights 19A, 19B and 21A, 21B are not visible, being underneath the beams 15A, 15B and 17A, 17B that form the bearing surfaces 15, 17. The workpieces P1 are positioned parallel to the beams 15A, 15B and 17A, 17B. This position is equivalent to that of Fig. 1. The damping means 33 may be supported by one of the uprights, or may be fastened to the beams so that the distance between them can be varied.

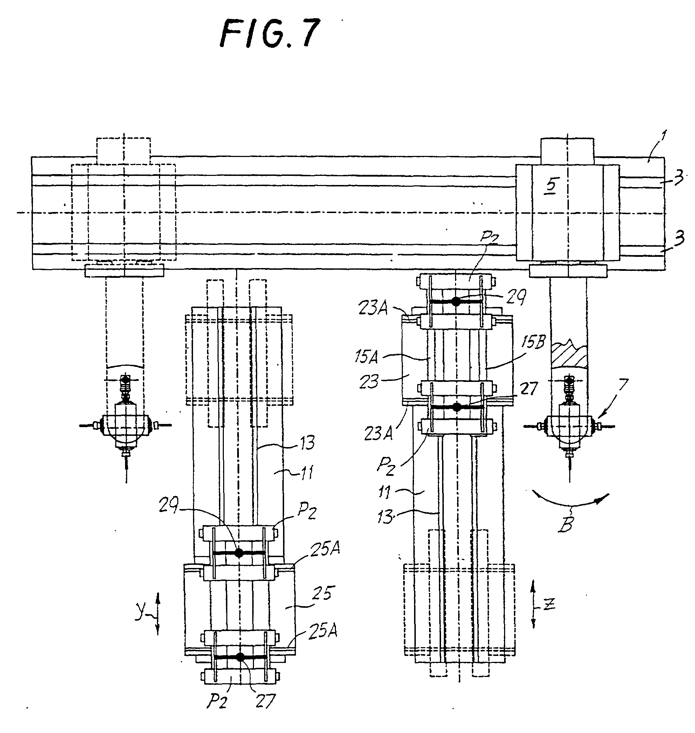

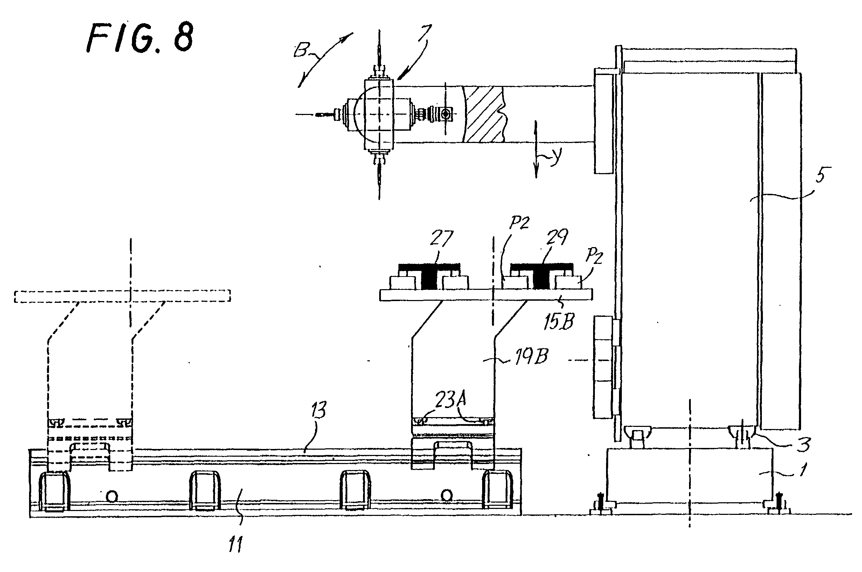

In Figs. 7 and 8 the beams are again arranged as in Fig. 6, that is at right angles to the axis X, so that the long dimension of the rectangular bearing surface defined by them is parallel to the axis of translation Z. The workpieces P2 are of smaller dimensions than workpieces P1 and are set at right angles to the beams 15A, 15B and 17A, 17B, in other words parallel to the short sides of the rectangular bearing surfaces. This arrangement corresponds to that of Fig. 2. Since the distance between the beams 15A, 15B and 17A, 17B can be varied, it is possible for the extremities of the workpieces P2 to overhang by an ideal amount which can be varied to suit each case, whereas in the embodiment shown in Figs. 1-5 the short dimension of the bearing surfaces could not be modified and therefore the smallest dimension of the workpieces was predetermined and it was impossible to modify how far each workpiece overhung its bearing surface.

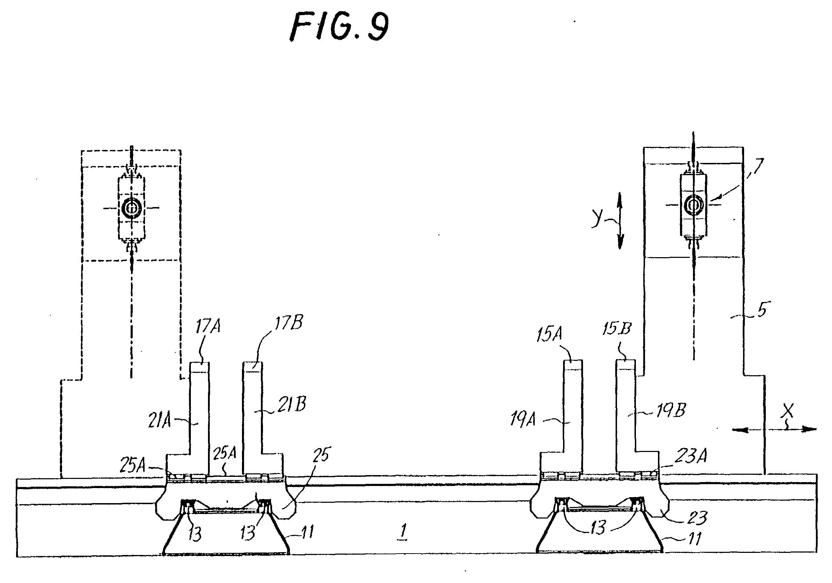

Fig. 9 shows a front view of the machine in the position of Fig. 8, omitting the workpieces and the clamping means for the latter.

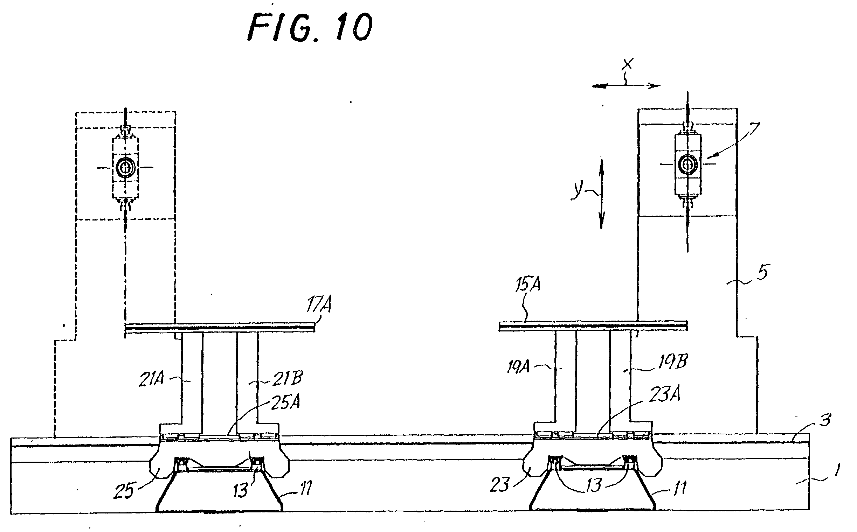

Fig. 10 shows a view similar to Fig. 9, in which the beams have been rotated through 90° and are now parallel to the axis X of translation.

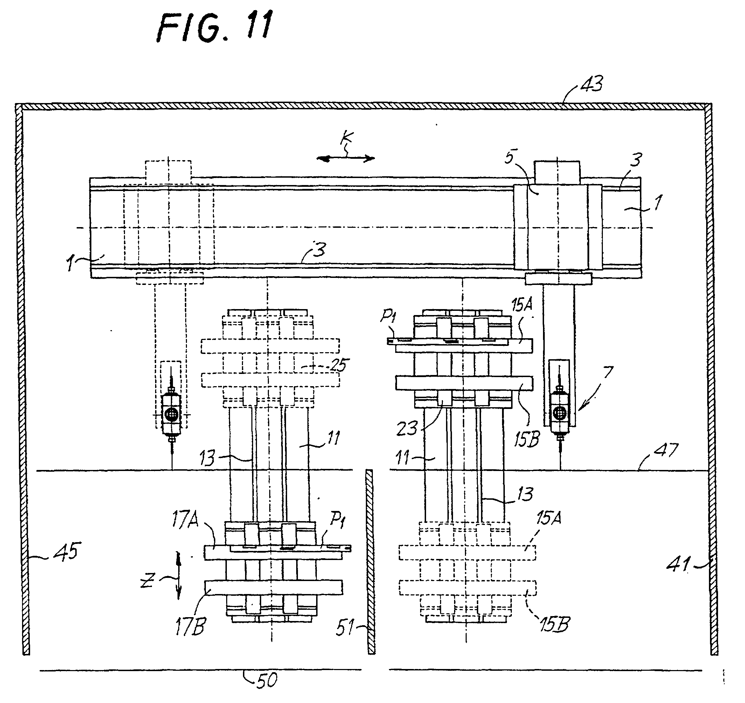

Lastly, Fig. 11 shows a plan view of the machine in the position shown in Fig. 10, with the workpieces P1 mounted in position for machining.

It should be understood that the drawing shows only an example which is provided purely as a practical demonstration of the invention, it being possible for said invention to be modified as regards shapes and arrangements without thereby departing from the scope of the claims. The presence of any reference numerals in the appended claims is for the purpose of facilitating the reading of the claims with reference to the description and drawing and does not limit the scope of protection represented by the claims.

## Claims

1. A machine tool for machining long workpieces, as for example parts for chairs, comprising supporting and clamping means for the workpieces (P1, P2, P3) and a machining head (7) that comprises at least one chuck and is moveable about two axes of rotation (A, B) and along a first axis of horizontal translation (X) and along a second axis of vertical translation (Y), the machining head and/or the supporting means being capable of relative movement along a third axis of horizontal translation (Z) orthogonal to said first horizontal translation axis (X) and to said vertical translation axis (Y); characterized in that
• said supporting means comprise at least one basically horizontal and rectangular bearing surface (15; 17; 15A; 15B; 17A; 17B), with a long side and a short side, that is able to assume a position in which said long side is perpendicular to said first axis of horizontal translation;
• said bearing surface is equipped with said clamping means for said workpieces;
• said at least one bearing surface is formed by at least one pair of parallel edge components (15A; 15B; 17A; 17B) supported by a pair of uprights (19A; 19B; 21A; 21B);
• said uprights (19, 21; 19A, 19B; 21A, 21B) keep said bearing surface at a height such that the machining head can machine said workpieces approaching the bearing surface from the side; and
• said uprights (19A; 19B; 21A; 21B) are adjustable on a supporting carriage (23; 25) to assume a variable distance between each other.

2. The machine tool as claimed in claim 1, characterized in that said supporting carriage (23; 25) is movable along said third axis of horizontal translation (Z).

3. The machine tool as claimed in claim 1 or 2, characterized in that said uprights keep said bearing surface at a height such that the machining head can machine the upper and the lower surface of said workpieces.

4. The machine tool as claimed in one or more of the preceding claims, characterized in that said edge components are formed by respective beams (15A;15B;17A;17B),

5. The machine as claimed claim 4, characterized in that each beam defining one of said bearing surfaces can be mounted either on one upright or simultaneously on both uprights, in order to assume a position perpendicular or parallel to said first axis of translation (X).

6. The machine tool as claimed in one or more of the preceding claims, characterized in that it comprises two or more bearing surfaces that can be moved independently of one another along said third axis of horizontal translation (Z).

7. The machine tool as claimed in claim 6, characterized by a moveable protective screen (47; 49) positioned on the path of said or each of said bearing surfaces, said protective screen separating a working area, where said machining head machines the workpieces fixed to the corresponding bearing surface, from a loading area, where the workpieces are loaded and clamped onto the corresponding bearing surface, which protective screen can be withdrawn out of the path of said bearing surface.

8. The machine tool as claimed in one or more of the preceding claims, characterized in that said bearing surface or surfaces can be oriented about a vertical axis in order alternatively to assume a position with its short side perpendicular to said first axis of horizontal translation (X).

9. The machine tool as claimed in claim 6 or 7 or 8, characterized in that an intermediate protective screen (51) is provided between two adjacent bearing surfaces.

10. The machine tool as claimed in one or more of the preceding claims, characterized in that the clamping means on said or each of said bearing surfaces are able to hold long workpieces arranged either along the long side or alternatively, along the short side of said bearing surface or surfaces.

11. The machine tool as claimed in one or more of the preceding claims, characterized in that said clamping means include a suction table.

12. The machine tool as claimed in one or more of the preceding claims, characterized in that said clamping means include one or more piston/cylinder actuators (27; 29) capable of being adjusted for position along its or their bearing surface, for controlling the closure of hold-down means for the workpieces.

13. The machine tool as claimed in one or more of the preceding claims,
characterized in that said or each of said bearing surfaces is formed by a rectangular table.

14. The machine as claimed in one or more of the preceding claims,
characterized in that said machining head comprises two or more chucks for two or more working tools.

## Patentansprüche

1. Werkzeugmaschine zum Bearbeiten von langen Werkstücken, wie beispielsweise Teilen von Stühlen, mit Halte- und Klemmitteln für die Werkstücke (P1, P2, P3) und einem Bearbeitungskopf (7) mit wenigstens einen Spannfutter, der um zwei Drehachsen (A, B) sowie entlang einer ersten horizontalen Translationsachse (X) und entlang einer zweiten vertikalen Translationsachse (Y) bewegbar ist, wobei der Bearbeitungskopf und/oder die Haltemittel eine Relativbewegung zueinander ausführen können entlang einer dritten horizontalen Translationsachse (Z), die rechtwinklig zu der ersten horizontalen Translationsachse (X) und zu der vertikalen Translationsachse (Y) ist, dadurch **gekennzeichnet**, daß
- die Haltemittel mindestens eine im wesentlichen horizontale und rechteckige Auflagefläche (15, 17, 15A, 15B, 17A, 17B) mit einer langen Seite und einer kurzen Seite umfassen, die eine Position einnehmen kann, in der die lange Seite rechtwinklig zu der ersten horizontalen Translationsachse ist;
- die Auflagefläche mit den Klemmitteln für die Werkstücke versehen ist;
- mindestens eine Auflagefläche von mindestens einem Paar von parallelen Kantenkomponenten (15A, 15B, 17A, 17B) gebildet ist, die von einem Paar von Ständern (19A, 19B, 21A, 21B) getragen werden;
- die Ständer (19, 21, 19A, 19B, 21A, 21B) die Auflagefläche in einer solchen Höhe halten, daß der Bearbeitungskopf die Werkstücke bearbeiten kann, indem er von der Seite her an die Auflagefläche herangefahren wird;
- die Ständer (19A, 19B, 21A, 21B) auf einem Tragwagen (23, 25) einstellbar sind, um einen veränderbaren Abstand zwischen sich einzunehmen.

2. Werkzeugmaschine nach Anspruch 1, dadurch **gekennzeichnet**, daß der Tragwagen (23, 25) entlang der dritten horizontalen Translationsachse (Z) bewegbar ist.

3. Werkzeugmaschine nach Anspruch 1 oder 2, dadurch **gekennzeichnet**, daß die Ständer die Auflagefläche in einer solchen Höhe halten, daß der Bearbeitungskopf die obere und die untere Oberfläche der Werkstücke bearbeiten kann.

4. Werkzeugmaschine nach einem oder mehreren der vorangehenden Ansprüche, dadurch **gekennzeichnet**, daß die Kantenkomponenten jeweils von Balken (15A, 15B, 17A, 17B) gebildet sind.

5. Maschine nach Anspruch 4, dadurch **gekennzeichnet**, daß jeder Balken, der eine der Auflageflächen definiert, entweder auf einem Ständer oder gleichzeitig auf beiden Ständern montiert sein kann, um eine Position rechtwinklig oder parallel zur ersten Achse der Bewegung (X) einnehmen zu können.

6. Werkzeugmaschine nach einem oder mehreren vorangehenden Ansprüche, dadurch **gekennzeichnet**, daß sie zwei oder mehr Auflageflächen aufweist, die unabhängig voneinander entlang dieser dritten horizontalen Translationsachse (Z) bewegt werden können.

7. Werkzeugmaschine nach Anspruch 6, **gekennzeichnet** durch einen bewegbaren Schutzschirm (47, 49), der auf dem Weg der einen oder jeder der Auflageflächen vorgesehen ist, wobei der Schutzschirm einen Arbeitsbereich, wo der Bearbeitungskopf die auf der jeweiligen Auflagefläche befestigten Werkstücke bearbeitet, von einem Ladebereich trennt, wo die Werkstücke auf der jeweiligen Auflagefläche geladen und festgeklemmt werden, wobei dieser Schutzschirm aus dem Weg der Auflagefläche herausgezogen werden kann.

8. Werkzeugmaschine nach einem oder mehreren der vorstehenden Ansprüche, dadurch **gekennzeichnet**, daß die Auflagefläche oder -flächen um eine Vertikalachse ausgerichtet werden können, um alternativ eine Position mit ihrer kurzen Seite rechtwinklig zu der ersten horizontalen Translationsachse (X) einnehmen zu können.

9. Werkzeugmaschine nach Anspruch 6, 7 oder 8, dadurch **gekennzeichnet**, daß zwischen zwei benachbarten Auflageflächen ein Zwischenschutzschirm (51) vorgesehen ist.

10. Werkzeugmaschine nach einem oder mehreren der vorstehenden Ansprüche, dadurch **gekennzeichnet**, daß die Klemmittel auf der oder jeder der Auflageflächen in der Lage sind, lange Werkstücke zu halten, die entweder entlang der langen Seite oder alternativ entlang der kurzen Seite dieser Auflagefläche oder -flächen angeordnet sind.

11. Werkzeugmaschine nach einem oder mehreren der vorstehenden Ansprüche, dadurch **gekennzeichnet**, daß die Klemmittel einen Saugtisch aufweisen.

12. Werkzeugmaschine nach einem oder mehreren der vorstehenden Ansprüche, dadurch **gekennzeichnet**, daß die Klemmittel ein oder mehrere Kolben/Zylinder-Betätigungselemente (27, 29) enthalten, die für die Positionierung entlang ihrer Auflagefläche einstellbar sind, um das Schließen von Niederhaltemitteln für die Werkstücke zu steuern.

13. Werkzeugmaschine nach einem oder mehreren der vorstehenden Ansprüche, dadurch **gekennzeichnet**, daß die oder jede Auflagefläche von einem Rechtecktisch gebildet ist.

14. Maschine nach einem der mehreren der vorangehenden Ansprüche, dadurch **gekennzeichnet**, daß der Bearbeitungskopf zwei oder mehr Futter für zwei oder mehr Bearbeitungswerkzeuge aufweist.

## Revendications

1. Machine-outil pour usiner des pièces d'usinage longues comme par exemple des pièces pour des chaises, comprenant des moyens de support et de serrage pour les pièces d'usinage (P1, P2, P3) et une tête d'usinage (7) qui comprend au moins un mandrin et qui peut se déplacer autour de deux axes de rotation (A, B) et le long d'un premier axe de translation horizontale (X) et le long d'un deuxième axe de translation verticale (Y), la tête d'usinage et/ou les moyens de support étant capables de déplacement relatif le long d'un troisième axe de translation horizontale (Z) orthogonal audit premier axe de translation horizontale (X) et audit axe de translation verticale (Y) ; caractérisée en ce que :
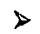 lesdits moyens de support comprennent au moins une surface d'appui (15; 17; 15A; 15B; 17A; 17B) fondamentalement horizontale et rectangulaire, dotée d'un grand côté et d'un petit côté, qui peut prendre une position dans laquelle ledit grand côté est perpendiculaire audit premier axe de translation horizontale ;
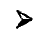 ladite surface d'appui est dotée desdits moyens de serrage pour lesdites pièces d'usinage ;
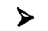 ladite surface d'appui, au moins au nombre de une, est formée par au moins une paire de composants (15A; 15B; 17A; 17B) à bords parallèles, supportés par une paire de montants (19A; 19B; 21A; 21B);
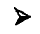 lesdits montants (19, 21 ; 19A, 19B ; 21A, 21B) maintiennent ladite surface d'appui à une hauteur telle, que la tête d'usinage peut usiner lesdites pièces d'usinage se rapprochant de la surface d'appui par le côté ; et
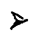 lesdits montants (19A ; 19B ; 21A ; 21B) sont réglables sur un chariot support (23 ; 25), pour prendre une distance variable entre chacun d'eux.

2. Machine-outil selon la revendication 1, caractérisée en ce que ledit chariot support (23 ; 25) peut se déplacer le long dudit troisième axe de translation horizontale (Z).

3. Machine-outil selon la revendication 1 ou 2, caractérisée en ce que lesdits montants maintiennent ladite surface d'appui à une hauteur telle, que la tête d'usinage peut usiner les surfaces supérieures et inférieures desdites pièces d'usinage.

4. Machine-outil selon l'une ou plusieurs des revendications précédentes, caractérisée en ce que lesdits composants des bords sont formés par des poutres respectives (15A ; 15B; 17A; 17B).

5. Machine-outil selon la revendication 4, caractérisée en ce que chaque poutre définissant une desdites surfaces d'appui peut être montée sur un montant ou simultanément sur deux montants, afin de prendre une position perpendiculaire ou parallèle audit premier axe de translation (X).

6. Machine-outil selon l'une ou plusieurs des revendications précédentes, caractérisée en ce qu'elle comprend deux surfaces d'appui ou plus qui peuvent être déplacées indépendamment l'une de l'autre, le long dudit troisième axe de translation horizontale (Z).

7. Machine-outil selon la revendication 6, caractérisée par un écran de protection mobile (47 ; 49) positionné sur la trajectoire de ladite ou de chacune desdites surfaces d'appui, ledit écran de protection séparant une zone d'usinage, où ladite tête d'usinage usîne les pièces fixées sur la surface d'appui correspondante, d'une zone de chargement où les pièces d'usinage sont chargées et serrées sur la surface d'appui correspondante, lequel écran de protection peut être retiré de la trajectoire de ladite surface d'appui.

8. Machine-outil selon l'une ou plusieurs des revendications précédentes, caractérisée en ce que ladite ou lesdites surfaces d'appui peuvent être orientées autour d'un axe vertical, afin de prendre alternativement une position, le petit côté de la surface d'appui étant perpendiculaire audit premier axe de translation horizontale (X).

9. Machine-outil selon la revendication 6 ou 7 ou 8, caractérisée en ce qu'un écran de protection intermédiaire (51) est prévu entre deux surfaces d'appui adjacentes.

10. Machine-outil selon l'une ou plusieurs des revendications précédentes, caractérisée en ce que les moyens de serrage sur ladite ou sur chacune desdites surfaces d'appui peuvent retenir des pièces d'usinage longues disposées le long du grand côté ou, alternativement, le long du petit côté de ladite ou desdites surfaces d'appui.

11. Machine-outil selon l'une ou plusieurs des revendications précédentes, caractérisée en ce que lesdits moyens de serrage comprennent une table d'aspiration.

12. Machine-outil selon l'une ou plusieurs des revendications précédentes, caractérisée en ce que lesdits moyens de serrage comprennent un ou plusieurs actionneurs (27 ; 29) à piston/cylindre pouvant être réglé(s) en position le long de sa ou de leur surface d'appui, pour commander la fermeture de moyens de retenue pour les pièces d'usinage.

13. Machine-outil selon l'une ou plusieurs des revendications précédentes, caractérisée en ce que ladite ou chacune desdites surfaces d'appui est formée par une table rectangulaire.

14. Machine-outil selon l'une ou plusieurs des revendications précédentes, caractérisée en ce que ladite tête d'usinage comprend deux mandrins ou plus pour deux machines-outils ou plus.
